# EUROPEAN PATENT APPLICATION

(11) **EP 2 653 702 A1**
(43) Date of publication of application: **23.10.2013**
(21) Application number: 10860788.8
(22) Date of filing: 16.12.2010
(51) Int. Cl.: F02D 13/02

(54) **AIR SUCTION DEVICE FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: IWATA, Kazuyasu, Toyota-shi, Aichi-ken 471-8571 (JP); YANASE, Yoshinori, Toyota-shi, Aichi-ken 471-8571 (JP); ITO, Katsuhiro, Toyota-shi, Aichi-ken 471-8571 (JP); KOGO, Tomoyuki, Toyota-shi, Aichi-ken 471-8571 (JP); OGAWA, Takashi, Toyota-shi, Aichi-ken 471-8571 (JP)
(74) Representative: Kuhnen & Wacker
(86) International application number: PCT/JP2010/072711
(87) International publication number: WO 2012/081118

(57) **Abstract**

An air suction device 2 for an internal combustion engine 1 includes: a first suction valve 54a provided in a first suction port 52a that leads a suction air to a combustion chamber 58; a second suction valve 54b provided in a second suction port 52b that leads a suction air to the combustion chamber 58; and a variable valve mechanism 57 that changes a phase of an opening period (working angle) of the second suction valve 54b; wherein a lift amount of the second suction valve 54b is smaller than that of the first suction valve 54a, and the variable valve mechanism 57 sets closing timing of the second suction valve 54b as timing after a bottom dead center is passed and the first suction valve 54a is closed.

## Description

### [TECHNICAL FIELD]

The present invention is related to an air suction device for an internal combustion engine, and more particularly, to an air suction device that can change an opening phase of a suction valve.

### [BACKGROUND ART]

In an internal combustion engine equipped with two suction valves, strengthening a swirl flow which occurs in a cylinder of the internal combustion engine is performed by mutually varying valve opening periods of suction valves and generating a flow difference between suction ports.

The composition which has improved such an internal combustion engine is disclosed by Patent Documents 1 to 4. Patent Document 1 discloses a control device of the internal combustion engine that controls the suction valves by combining a control of closing only one suction valve early in order to obtain requested swirl and a control of opening both of the suction valves early. Patent Document 2 discloses an engine valve mechanism that changes a center phase of the lift characteristic of another suction valve relative to a center phase of the lift characteristic of one suction valve, and changes lift amounts of two suction valves. Patent Document 3 discloses an internal combustion engine that generates a swirl by a control of closing a suction valve arranged in a helical port before a suction valve arranged in a tangential port is closed. Patent Document 4 discloses a variable valve device that controls a phase of another suction valve relative to one suction valve by changing a phase of a camshaft. In addition, Patent Document 5 discloses a fluid pressure driving device which controls independently the valve opening phases of two suction valves.

### [PRIOR ART DOCUMENT]

### [PATENT DOCUMENT]

[Patent Document 1] Japanese Patent Application Publication No. 2009-162113
[Patent Document 2] Japanese Patent Application Publication No. 2009-228640
[Patent Document 3] Japanese Patent Application Publication No. 2009-2173
[Patent Document 4] Japanese Patent Application Publication No. 2009-74366
[Patent Document 5] Japanese National Publication of International Patent
   Application No. 2010-502884

### [SUMMARY OF THE INVENTION]

### [PROBLEMS TO BE SOLVED BY THE INVENTION]

And now, closing timing of the suction valve of the internal combustion engine is retarded, so that an effective compression ratio can be decreased and thermal efficiency can be improved. Thus, the internal combustion engine that decreases the effective compression ratio is combined with a technique that controls the swirl flow in the cylinder, so that an internal combustion engine having superior performance can be obtained.

However, since the internal combustion engine that decreases the effective compression ratio retards the closing timing of the suction valve, it blows the gas taken in the cylinder to the suction port. Therefore, a gas volume in a combustion chamber decreases. Since the decrease of the gas volume in the combustion chamber prevents the decrease of NOx and smoke, an effect which restrains deterioration of exhaust emission is decreased.

Therefore, the present invention has been made in consideration of the above problem, and its object is to provide an air suction device for an internal combustion engine that decreases NOx and smoke, improves thermal efficiency and restrains deterioration of exhaust emission in the internal combustion engine that decreases an effective compression ratio.

### [MEANS FOR SOLVING THE PROBLEMS]

To solve the above problem, an air suction device for an internal combustion engine of the present invention characterized by comprising: a first suction valve provided in a first suction port that leads a suction air to a combustion chamber; a second suction valve provided in a second suction port that leads a suction air to the combustion chamber; and a variable valve mechanism that changes a phase of an opening period of the second suction valve; wherein a lift amount of the second suction valve is smaller than that of the first suction valve, and the variable valve mechanism sets closing timing of the second suction valve as timing after a bottom dead center is passed and the first suction valve is closed.

### [EFFECTS OF THE INVENTION]

The air suction device for the internal combustion engine according to the present invention can decrease an effective compression ratio, improve thermal efficiency, decrease NOx and smoke, and restrain deterioration of emission.

### [BRIEF DESCRIPTION OF THE DRAWINGS]

FIG. 1 is a whole configuration diagram of an air suction device for an internal combustion engine;
FIG. 2 is a schematic configuration diagram of an engine body;
FIG. 3 is a configuration diagram of a suction port;
FIG. 4 is an explanatory diagram illustrating valve timing (IVC30ABDC) in a normal operating condition;
FIG. 5 is an explanatory diagram illustrating valve timing (IVC50ABDC) in which a suction valve is closed late;
FIG. 6 is an explanatory diagram illustrating a relationship between a gas volume in a cylinder and a boost pressure with respect to valve timings in FIGs. 4 and 5;
FIG. 7 is an explanatory diagram illustrating a relationship between a valve lift amount and a crank angle with respect to a first suction valve and a second suction valve;
FIG. 8 is an explanatory diagram illustrating comparison of lift amounts in the closing timing of the first suction valve and the second suction valve; and
FIG. 9 is an explanatory diagram illustrating a relationship between the valve lift amount and the crank angle with respect to the first suction valve and the second suction valve according to the second embodiment.

### [MODES FOR CARRYING OUT THE INVENTION]

Hereinafter, a description will be given of an embodiment of the present invention with reference to the drawings.

### First Embodiment

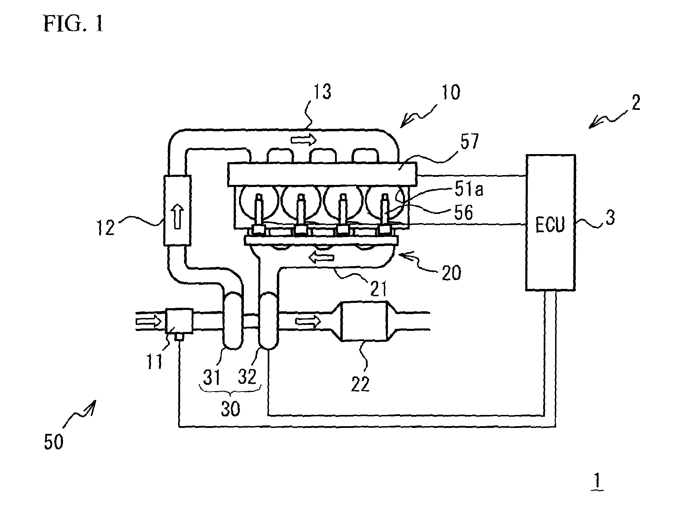

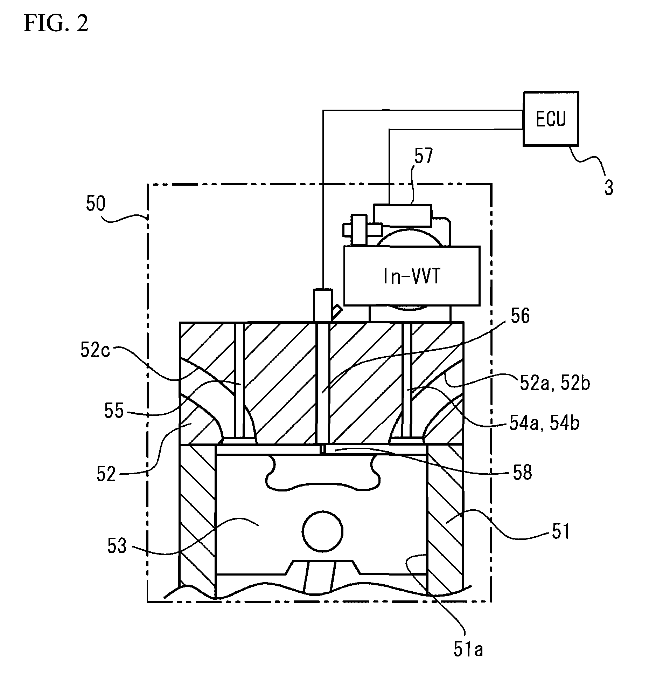

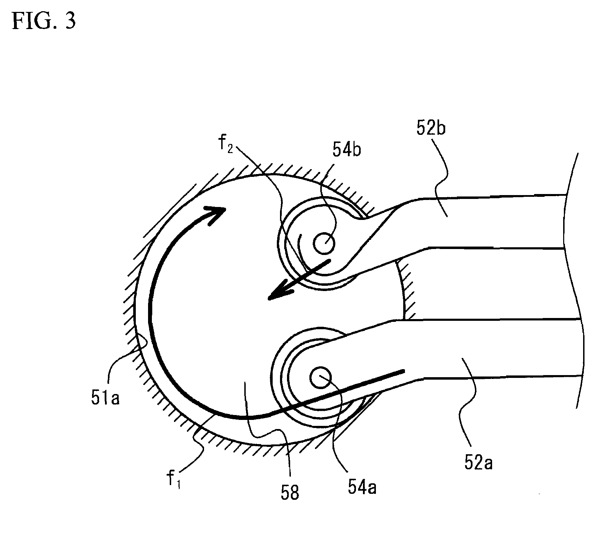

A description will be given of an air suction device 2 for an internal combustion engine 1 according to a first embodiment of the present invention. FIG. 1 is a whole block diagram of the air suction device 2 for the internal combustion engine 1. The internal combustion engine1 is a compression ignition type internal combustion engine (diesel engine). The internal combustion engine1 is equipped with an engine body 50. The air suction device 2 is equipped with configurations relating to a suction air in the engine body 50, and an ECU(Electronic Control Unit) 3 which performs various controls of the internal combustion engine 1. The configurations relating to the suction air in the engine body 50 concretely indicate suction ports, suction valves, a valve mechanism that opens and closes the suction valves, and a configuration that takes in a new air required for the combustion of a fuel in the engine body 50. FIG. 2 is a schematic configuration diagram of the engine body 50. FIG. 3 is a configuration diagram of the suction port.

As illustrated in FIG. 1, a suction system 10 includes an airflow meter 11, an inter cooler 12, and a suction manifold 13. The airflow meter 11 measures a suction air amount. The inter cooler 12 cools the suction air which a supercharger 30 has compressed. The suction manifold 13 distributes the suction air to each cylinder 51a of the internal combustion engine 1.

An exhaust system 20 includes an exhaust manifold 21 and a catalyst 22. The exhaust manifold 21 causes the exhaust gas from each cylinder 51a to join in an exhaust path at the downstream side. The catalyst 22 purifies the exhaust gas. The supercharger 30 includes a compressor portion 31 and a turbine portion 32. The supercharger 30 is an exhaust drive-type variable geometry turbocharger, and is provided so that the compressor portion 31 is placed on the suction system 10 and the turbine portion 32 is placed on the exhaust system 20, respectively.

As illustrated in FIG. 2, the engine body 50 includes a cylinder block 51, a cylinder head 52, a piston 53, a first suction valve 54a, a second suction valve 54b, exhaust valves 55, a fuel injection valve 56, and a variable valve mechanism 57.

A cylinder 51a is provided in the cylinder block 51. The piston 53 is accommodated in the cylinder 51a. The cylinder head 52 is fixed on a top surface of the cylinder block 51. A combustion chamber 58 is formed as a space surrounded by the cylinder block 51, the cylinder head 52, and the piston 53.

A first suction port 52a, a second suction port 52b and two exhaust ports 52c are formed in the cylinder head 52. The first suction port 52a and the second suction port 52b lead the suction air to the combustion chamber 58, and the exhaust ports 52c discharge gas from the combustion chamber 58. The first suction valve 54a is provided in the first suction port 52a. The first suction valve 54a opens and closes the first suction port 52a. The second suction valve 54b is provided in the second suction port 52b. The second suction valve 54b opens and closes the second suction port 52b. The exhaust valves 55 are provided in the exhaust ports 52c. The exhaust valves 55 open and close the exhaust ports 52c.

Here, a description will be given of the first suction port 52a and the second suction port 52b in detail, with respect to FIG. 3. The first suction port 52a is formed in the form leading the suction air along a cylinder wall surface of the combustion chamber 58. There is a tangential port as an example of the form leading the suction air along the cylinder wall surface of the combustion chamber 58. Since the first suction port 52a leads the suction air along the cylinder wall surface, the first suction port 52a generates a swirl flow f₁ in the combustion chamber 58. Moreover, as the flow volume of the suction air which flows through the first suction port 52a increases, the intensity of the swirl flow generated in the combustion chamber 58 increases. Then, the second suction port 52b is formed spirally. There is a helical port as an example of the suction port formed spirally. The second suction port 52b leads a swirl flow f₂ to the center of the combustion chamber 58. Since the second suction port 52b is formed spirally, a flow coefficient of the second suction port 52b is smaller than that of the first suction port 52a.

Also, the fuel injection valve 56 is provided in the cylinder head 52. The fuel injection valve 56 directly injects a fuel in the cylinder. The variable valve mechanism 57 is provided on the cylinder head 52. The variable valve mechanism 57 is a valve mechanism that opens the first suction valve 54a and the second suction valve 54b independently of each other.

The ECU 3 is an electronic control unit, includes a microcomputer composed of a CPU (Central Processing Unit), a RAM (Random Access Memory), a ROM (Read Only Memory), and so on, and an input and output circuit. Various sensors and switches with which the engine body 50 is equipped are electrically connected to the ECU3. In addition, various controlled objects such as the supercharger 30, the fuel injection valve 56, and the variable valve mechanism 57 are electrically connected to the ECU3.

In opening-and-closing control of the suction valves by the ECU 3, the ECU 3 fixes the valve timing of the first suction valve 54a, and integrally changes the opening timing and the closing timing of the second suction valve 54b, so that the ECU 3 controls an opening period (working angle) of the second suction valve 54b. Thereby, the closing timing of the second suction valve 54b is retarded compared with the closing timing of the first suction valve 54a.
The ECU 3 decides the opening period (working angle) of the second suction valve 54b, and transmits a signal on the operation of the suction valves to the variable valve mechanism 57. Thereby, the variable valve mechanism 57 changes the phase of the opening period (working angle) of the second suction valve 54b. The variable valve mechanism 57 changes the opening period (working angle) of the second suction valve 54b by changing the phase of the cam of the second suction valve 54b. On the other hand, the variable valve mechanism 57 does not change the opening period (working angle) of the first suction valve 54a.

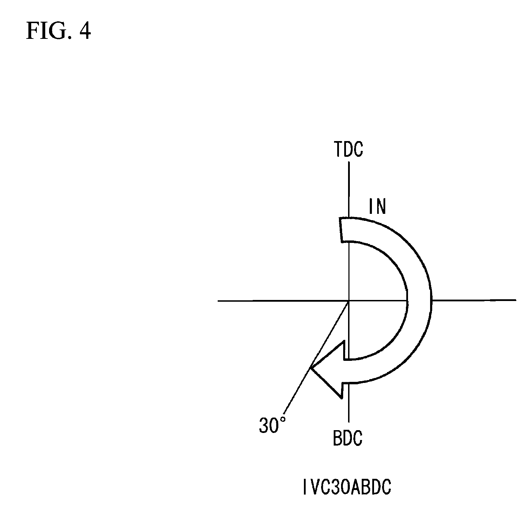

Here, a description will be given of the internal combustion engine that decreases an effective compression ratio by retarding the closing timing of the suction valve. Since such an internal combustion engine retards the closing timing of the suction valve, it blows back the gas taken in the cylinder to the suction port. This matter is explained with reference to FIGs. 4 to 6.

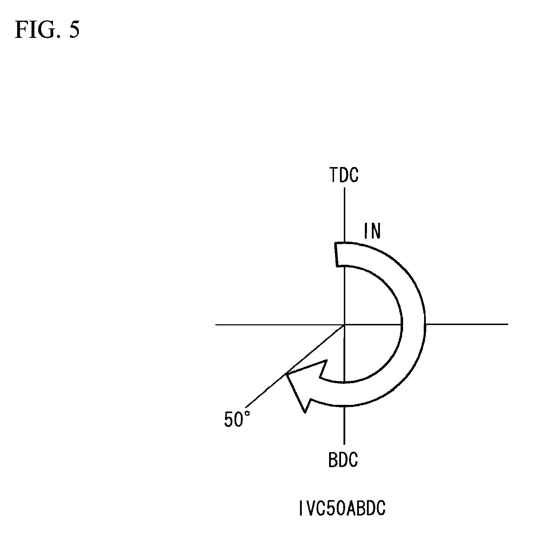

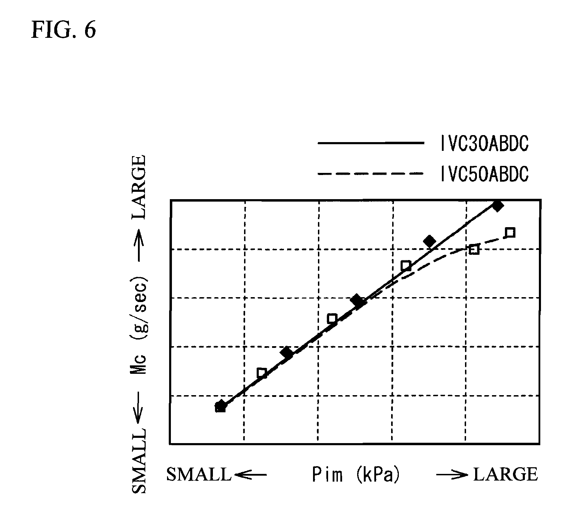

FIGs. 4 and 5 are explanatory diagrams illustrating valve timings of the suction valve. FIG. 4 illustrates valve timing (IVC30ABDC) in a normal operating condition. FIG. 5 illustrates valve timing (IVC50ABDC) in which the suction valve is closed late. The valve timing (IVC50ABDC) in which the suction valve is closed late is performed for the purpose of the decrease of the effective compression ratio. FIG. 6 is an explanatory diagram illustrating a relationship between a gas volume Mc (g/sec) in the cylinder and a boost pressure Pim (kPa) with respect to valve timings in FIGs. 4 and 5 when an engine speed is 2600 rpm. A vertical axis in FIG. 6 illustrates the gas volume Mc in the cylinder, and a horizontal axis illustrates the boost pressure Pim. A solid line in FIG. 6 illustrates the valve timing (IVC30ABDC) in the normal operating condition, and a dashed line illustrates the valve timing (IVC50ABDC) in which the suction valve is closed late. According to FIG. 6, in the case of the valve timing in which the suction valve is closed late, the gas volume in the cylinder decreases in a domain in which the pressure in the cylinder becomes high, as compared with the case of the valve timing in the normal operating condition. This is because a period in which the suction valve opens after a bottom dead center is long, the back blow in which the gas taken in the cylinder is blown to the suction port arises. Since the decrease of such a gas volume in the combustion chamber prevents the decrease of NOx and smoke, an effect which restrains deterioration of exhaust emission is decreased. The air suction device 2 of the internal combustion engine 1 decreases the effective compression ratio, improves thermal efficiency, and restrains deterioration of emission in consideration of the above-mentioned back-blow of the gas. Hereinafter, a description will be given of the valve timing and a valve lift amount for achieving the decrease of the effective compression ratio, and restraint of deterioration of emission.

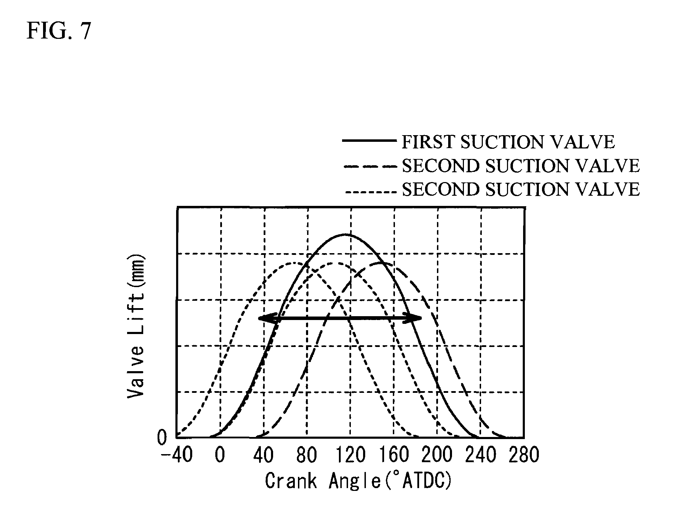

FIG. 7 is an explanatory diagram illustrating valve timings of the first suction valve 54a and the second suction valve 54b. A vertical axis in FIG. 7 illustrates the valve lift amount, and a horizontal axis illustrates a crank angle. A solid line in FIG. 7 illustrates the valve timing of the first suction valve 54a.
A large dashed line and small dashed lines illustrate the valve timing of the second suction valve 54b. The variable valve mechanism 57 can change the phase of the opening period (working angle) of the second suction valve 54b, and hence the variable valve mechanism 57 can set the valve titiming as illustrated by the small dashed lines other than the large dashed line.

As illustrated in FIG. 7, a maximum lift amount of the second suction valve 54b is set smaller than that of the first suction valve 54a. Moreover, the opening period (working angle) of the first suction valve 54a is larger than that of the second suction valve 54b. The first suction valve 54a opens near a top dead center. In addition, as illustrated by the large dashed line in FIG. 7, the valve lift is set when the closing timing of the second suction valve 54b is timing after the bottom dead center is passed and the first suction valve 54a is closed.

When the closing timing of the second suction valve 54b is timing after the bottom dead center is passed and the first suction valve 54a is closed (the case of the valve timing illustrated by the large dashed line in FIG. 7), there are the following features. First, only the first suction valve 54a is opened at air suction beginning time (about 0 to 40° ATDC), so that the swirl flow is generated in the combustion chamber 58.

Moreover, the lift amount of the second suction valve 54b is smaller than that of the first suction valve 54a. In addition, the second suction valve 54b opens later than the first suction valve 54a. Therefore, the lift amount of the first suction valve 54a is large till the middle of a suction stroke (about 40 to 150° ATDC), and a new air amount taken in the combustion chamber 58 is more from the first suction port 52a than from the second suction port 52b. Therefore, there occur variations in the new air taken in the combustion chamber 58. Thereby, the swirl flow which the first suction valve 54a generates by the flow volume is further strengthened.

Then, new air is taken in by a suction inertia effect for a certain period (about 180 to 240° ATDC) after the bottom dead center is passed. In a period (about 240 to 260° ATDC) after the bottom dead center is passed and the first suction valve 54a is closed, the second suction valve 54b is opened, and hence the new air taken in the combustion chamber 58 is blown back to the second suction port 52b. A back-blow amount at this time is explained with a relation with the lift amount of the second suction valve 54b.

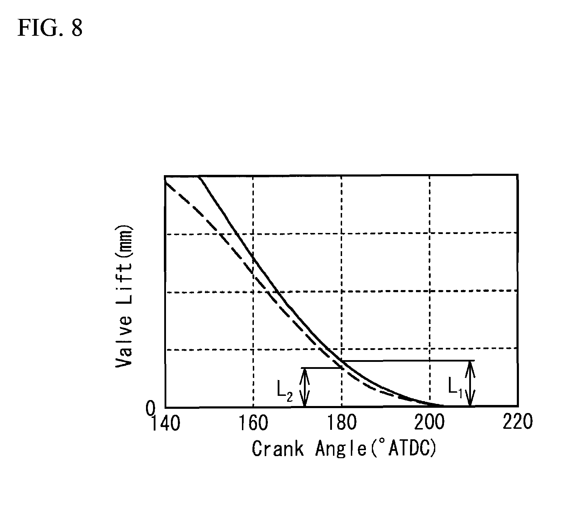

FIG. 8 is an explanatory diagram illustrating comparison of lift amounts in the closing timing of the first suction valve 54a and the second suction valve 54b. A vertical axis in FIG. 8 illustrates the valve lift amount, and a horizontal axis illustrates the crank angle. A solid line in FIG. 8 illustrates the valve lift amount of the first suction valve 54a. A dashed line in FIG. 8 illustrate the valve lift amount of the second suction valve 54b. The valve timings of the first suction valve 54a and the second suction valve 54b illustrated in FIG. 8 make closing timing identical with each other for comparison (205° ATDC). Since the lift amount of the second suction valve 54b is set smaller than the lift amount of the first suction valve 54a, in the same crank angle, the lift amount of the second suction valve 54b is smaller than the lift amount of the first suction valve 54a (L1 > L2). Therefore, a flow channel of the gas in the second suction port 52b is small, and its flow coefficient is small. Since the flow channel of the second suction port 52b is spiral, the flow coefficient is small. Therefore, the back-blow amount of the new air taken in the cylinder decreases. Since the back-blow amount decreases, an amount of the new air in the combustion chamber 58 increases. Thereby, the smoke can be decreased and the exhaust emission can be restrained.

Also, since the lift amount of the first suction valve 54a that has fixed the opening period (working angle) is large, a gas exchange ratio is excellent and a volumetric efficiency is high. In addition, since the opening period (working angle) of the first suction valve 54a is larger than the opening period (working angle) of the second suction valve 54b, the gas volume to be taken in the cylinder can be further increased. Thereby, the volumetric efficiency can be increased. Moreover, the gas volume in the cylinder can be secured and the decrease of the emission can be restrained.

The air suction device 2 for the internal combustion engine 1 according to the present embodiment forms a difference between the lift amounts of the first suction valve 54a and the second suction valve 54b, generates a flow difference, and generates the swirl flow in the cylinder. Therefore, a good combustion state can be generated and deterioration of the exhaust emission can be restrained. Since a suction volume can be secured by the first suction port 52a in which the first suction valve 54a with a large lift amount is provided, the volumetric efficiency is improved. Moreover, the closing timing of the second suction valve 54b is set to timing after the bottom dead center, and the effective compression ratio is decreased. Thereby, thermal efficiency is improved, and hence fuel consumption can be improved. Moreover, since the lift amount of the second suction valve is small when the closing timing is timing after the bottom dead center, the gas volume blown back to the suction port is decreased, and the gas volume in the cylinder is maintained. Thereby, the deterioration of the emission can be restrained. Thus, the air suction device 2 for the internal combustion engine 1 according to the present embodiment achieves the increase of the gas flow in the cylinder, the improvement of the volumetric efficiency and the decrease of the effective compression ratio. As a result, both of the improvement of efficiency and the restraint of the exhaust emission can be performed.

When the internal combustion engine 1 is a diesel engine, the diesel engine with a high efficiency that has decreased the exhaust emission can be offered. The fuel consumption can be improved by generating the swirl before and after the compression top dead center peculiar to the diesel engine, and the performance can be improved by the increase of internal EGR and the improvement of the control.

### Second Embodiment

Next, a description will be given of the air suction device for the internal combustion engine according to the second embodiment. The configurations of the air suction device for the internal combustion engine according to the present embodiment are the same as those of the air suction device 2 for the internal combustion engine 1 according to the first embodiment. The present embodiment is different from the first embodiment in that the opening timing of the first suction valve differs. The present embodiment will be explained using the same reference numerals given to the air suction device 2 for the internal combustion engine 1 according to the first embodiment.

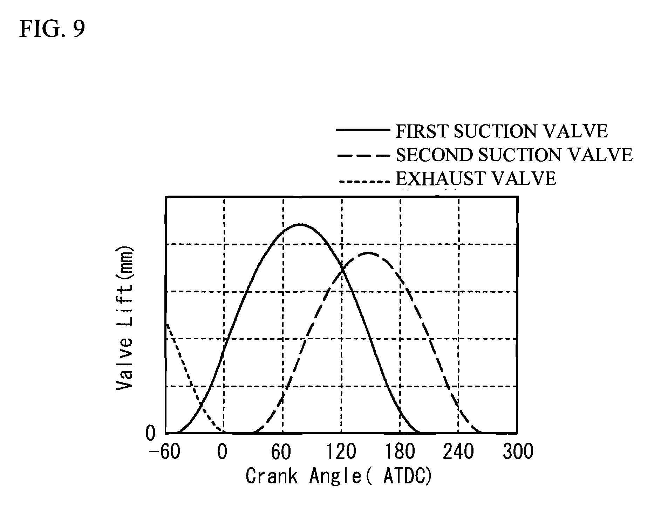

FIG. 9 is an explanatory diagram illustrating the valve timings of the first suction valve 54a and the second suction valve 54b according to the present embodiment. A vertical axis in FIG. 9 illustrates the valve lift amount, and a horizontal axis illustrates the crank angle. A solid line in FIG. 9 illustrates the valve timing of the first suction valve 54a. A large dashed line in FIG. 9 illustrate the valve timing of the second suction valve 54b. A small dashed line in FIG. 9 illustrate the valve timing of the exhaust valves 55. In the present embodiment, the first suction valve 54a opens before the exhaust valves 55 close, and the second suction valve 54b opens after the exhaust valves 55 close, as illustrated in FIG. 9. That is, the first suction valve 54a and the exhaust valves 55 are overlapped, and the second suction valve 54b and the exhaust valves 55 are not overlapped. Here, as is the case with the first embodiment, the valve lift of the first suction valve 54a is fixed, and the opening period (working angle) of the second suction valve 54b is variable. The two exhaust valves 55 provided in the engine body 50 are configured so as to open and close simultaneously.

In the internal combustion engine 1 in which the supercharger 30 is installed, a turbo lag occurs in an initial stage of acceleration, and hence an exhaust pressure becomes extremely larger than a suction pressure. Therefore, the so-called inside EGR where the gas after combustion is blown back to a suction port side occurs. The valve timings in which the first suction valve 54a and the exhaust valves 55 are overlapped and the second suction valve 54b and the exhaust valves 55 are not overlapped are set at the time of acceleration control. Thereby, EGR gas can be sent to the first suction port 52a without being sent to the second suction port 52b.

The first suction port 52a is formed in the form leading the suction air along a cylinder wall surface of the combustion chamber 58. Therefore, in the suction stroke, the EGR gas accumulated for an overlap period is sent to a side of the cylinder wall surface of the combustion chamber 58 along with the new air. On the contrary, the second suction port 52b supplies the new air which does not contain the EGR gas to a central side of the combustion chamber 58. Thereby, in the combustion chamber 58, the EGR gas is distributed over the cylinder wall surface, and the new air is distributed over a central part. Since the EGR gas does not contribute to combustion, transfer of heat is restrained between a wall surface of the combustion chamber 58 and the inside of the cylinder, and insulation effectiveness is obtained. On the contrary, since the new air supplied from the second suction port 52b gathers in the center of the combustion chamber 58, it is restrained that the fuel-air mixture at the time of combustion becomes rich, and deterioration of acceleration performance can be restrained. Thus, since sending the EGR gas to the first suction port 52a does not cause deterioration of the acceleration performance, the opening timing of the first suction valve 54a is advanced, and the opening period (working angle) can be expanded as a large working angle. By expanding the opening period (working angle) as the large working angle, a reduction amount of the EGR gas is increased and the discharge of NOx can be decreased. Since the lift amount of the first suction valve 54a can be increased near the top dead center where the movement speed of the piston 53 is quick, an uptake amount of the new air can be increased. Thereby, the volumetric efficiency can be enhanced, and strengthening of the swirl flow can also be performed. As is the case with the first embodiment, since the second suction valve 54b is closed after the bottom dead center of the air suction, the effective compression ratio can be decreased. Thus, both of the improvement of the volumetric efficiency and the decrease of the effective compression ratio, which has a trade-off relationship, can be achieved.

Here, in the configuration of the present embodiment, the size of a recess formed on a head unit of the piston 53 may be enlarged depending on advancing the opening timing of the first suction valve 54a. Thereby, a stamp of the suction valve to the piston can be prevented.

Above described embodiments are exemplary embodiments carrying out the present invention. Therefore, the present invention is not limited to those, and various modification and change could be made hereto without departing from the spirit and scope of the claimed present invention. Furthermore, it is obvious from the above-mentioned description that other various embodiments can be realized within the scope of the present invention.

### [DESCRIPTION OF LETTERS OR NUMERALS]

- 1: internal combustion engine
- 2: air suction device
- 3: ECU
- 50: engine body
- 52a: first suction port
- 52b: second suction port
- 52c: exhaust port
- 54a: first suction valve
- 54b: second suction valve
- 55: exhaust valve
- 57: variable valve mechanism
- 58: combustion chamber

## Claims

1. An air suction device for an internal combustion engine **characterized by** comprising:
a first suction valve provided in a first suction port that leads a suction air to a combustion chamber;
a second suction valve provided in a second suction port that leads a suction air to the combustion chamber; and
a variable valve mechanism that changes a phase of an opening period of the second suction valve;
wherein a lift amount of the second suction valve is smaller than that of the first suction valve, and
the variable valve mechanism sets closing timing of the second suction valve as timing after a bottom dead center is passed and the first suction valve is closed.

2. The air suction device for the internal combustion engine according to claim 1, **characterized in that** a working angle of the first suction valve is larger than that of the second suction valve.

3. The air suction device for the internal combustion engine according to claim 1 or 2, **characterized in that** the first suction port has a form that leads the suction air along a cylinder wall surface of the combustion chamber.

4. The air suction device for the internal combustion engine according to claim 3, **characterized in that** the first suction valve opens before an exhaust valve closes, and the second suction valve opens after the exhaust valve closes.

5. The air suction device for the internal combustion engine according to any one of claims 1 to 4, **characterized in that** the second suction port is formed spirally.

6. The air suction device for the internal combustion engine according to any one of claims 1 to 5, **characterized in that** the internal combustion engine is a diesel engine.
